# EUROPÄISCHE PATENTSCHRIFT

(11) **EP 3 068 718 B1**
(45) Veröffentlichungstag und Bekanntmachung des Hinweises auf die Patenterteilung: **03.01.2018**
(21) Anmeldenummer: 14798788.7
(22) Anmeldetag: 11.11.2014
(51) Int. Cl.: B66B 1/34, B66B 5/00, G01J 5/00

(54) **ANWESENHEITSDETEKTION EINES OBJEKTES IN EINER AUFZUGSKABINE**
PRESENCE DETECTION OF AN OBJECT IN AN ELEVATOR CAR
DÉTECTION DE LA PRÉSENCE D'UN OBJET DANS UNE CABINE D'ASCENSEUR

(30) Priorität: 15.11.2013 EP 13193001
(43) Veröffentlichungstag der Anmeldung: 21.09.2016
(73) Patentinhaber: Inventio AG, 6052 Hergiswil (CH)
(72) Erfinder: SONNENMOSER, Astrid, CH-6280 Hochdorf (CH); KUSSEROW, Martin, CH-6005 Luzern (CH); TSCHUPPERT, Reto, CH-6015 Luzern (CH)
(86) Internationale Anmeldenummer: PCT/EP2014/074265
(87) Internationale Veröffentlichungsnummer: WO 2015/071258

(56) Entgegenhaltungen:
- JP-A- 2003 040 541
- US-A- 4 555 724

## Beschreibung

Die Erfindung betrifft ein Verfahren und eine Vorrichtung zur Anwesenheitsdetektion eines Objektes in einer Aufzugskabine einer eine Steuereinheit aufweisenden Aufzugsanlage.

Eine Aufzugsanlage in einem Gebäude weist eine Aufzugskabine auf, welche zwischen Stockwerken des Gebäudes vertikal gefahren wird. Dazu ist die Aufzugskabine über ein Tragmittel mit einem Aufzugsantrieb verbunden.

JP 2003-040541 beschreibt eine Einrichtung zum Verhindern dass Passagiere in einer Aufzugskabine eingeschlossen bleiben. Die Einrichtung umfasst eine Video-Überwachungskamera und einen Bildprozessor. Der Bildprozessor vergleicht die durchschnittliche Helligkeit der von der Überwachungskamera detektierten Bildpixeln mit der durchschnittlichen Helligkeit der Pixel von Referenzbildern der leeren Aufzugskabine, welche Referenzbilder bei unterschiedlicher Beleuchtung aufgenommen wurden.

Die Europäische Patentanmeldung EP 0 832 839 A1 beschreibt ein Identifikationssystem für eine Aufzugsanlage. Ein Aufzugsbenutzer trägt einen Informationsgeber, wobei dieser Informationsgeber individuelle Daten wie beispielsweise Gewicht und Körpermaße des Aufzugsbenutzers sowie ein gewünschtes Zielstockwerk an eine Erkennungseinrichtung innerhalb des Aufzuges übermittelt. Der beschriebene Informationsgeber verwendet elektromagnetische Wellen zur Informationsübermittlung. Darüber hinaus wird durch eine separate Einheit das momentane Gewicht des Aufzugs bestimmt.

Die US-amerikanische Patentschrift US 5 555 512 offenbart einen Bildverarbeitungsapparat zur Verarbeitung von Infrarotbildern, welche mit einem Infrarotsensor gemessen wurden. Das Infrarotbild zeigt die Wärmeverteilung innerhalb eines bestimmten Bereiches an. Der Bildverarbeitungsapparat verfügt ferner über eine Bildverarbeitungseinheit zur Extraktion von personenbezogenen Daten sowie von Charakteristika der Umwelt auf Basis der Infrarotbilder. Hierzu werden repräsentative Punkte eines eine Person darstellenden Bereiches innerhalb des Infrarotbildes, eine Anzahl an Personen darstellenden Bereichen sowie eine Anzahl an Bildpunkten innerhalb der Bereiche ermittelt. Zudem werden durchschnittliche Temperaturen der Bereiche und Positionen von Gliedmaßen der Personen bestimmt.

Zur Anwesenheit einer Person in einer Aufzugskabine kann auch ein Bewegungsmelder verwendet werden. Ein Bewegungsmelder ist ein elektronischer Sensor, der Bewegungen in seiner näheren Umgebung erkennt und dadurch als elektrischer Schalter arbeiten kann. Dabei kann er entweder aktiv mit elektromagnetischen Wellen (Dopplerradar), mit Ultraschall (Ultraschall-Bewegungsmelder) oder passiv anhand der Infrarotstrahlung der Umgebung arbeiten; es gibt auch Kombinationen davon.

Eine Aufgabe der Erfindung ist es, ein einfacheres, effizienteres und kostengünstigeres Verfahren zur Detektion der Anwesenheit eines Objektes in einer Aufzugskabine einer Aufzugsanlage vorzuschlagen.

Die Erfindung wird anhand der Merkmale der unabhängigen Patentansprüche gelöst. Weiterführungen sind in den abhängigen Ansprüchen angegeben.

Ein Kern der Erfindung ist darin zu sehen, dass in einer Aufzugskabine einer Aufzugsanlage während des Aufzugbetriebs durch einen in der Aufzugskabine angebrachten Farbtemperatursensor die Farbtemperatur des auf den Farbtemperatursensor auftreffenden Lichts erfasst wird, und dass in Abhängigkeit von einem Vergleich der während des Aufzugbetriebs erfassten Farbtemperatur mit einer vorher erfassten Referenz-Farbtemperatur ein in der Aufzugskabine vorhandenes Objekt durch eine mit dem Farbtemperatursensor verbundene Steuereinheit detektiert wird.

Die Farbtemperatur ist ein Maß, das es ermöglicht, den Farbeindruck einer Lichtquelle quantitativ zu bestimmen. Die Farbtemperatur ist definiert als die Temperatur eines Schwarzen Körpers, des sogenannten Planck'schen Strahlers, die zu einer bestimmten Farbe des Lichts gehört, das von dem Schwarzen Körper ausgeht. Konkret ist es diejenige Temperatur, bei welcher die Lichtwirkung des Schwarzen Körpers bei gleicher Helligkeit und unter festgelegten Beobachtungsbedingungen der zu beschreibenden Farbe am ähnlichsten ist. Wegen der Korrelation mit der Temperatur eines Schwarzen Körpers wird für die Farbtemperatur die Abkürzung CCT (Correlated Color Temperature) verwendet. Die Einheit der Farbtemperatur ist Kelvin (K).

Unter dem Begriff "Farbtemperatursensor" ist ein signalgebendes optisches Gerät zur selektiven Erfassung und Bewertung des sichtbaren Spektralbereichs von Licht zu verstehen, welcher Spektralbereich Wellenlängen von etwa 380 nm bis 780 nm umfasst. Typische Bezeichnungen für einen Farbtemperatursensor sind beispielsweise LAB-Farbtemperatursensor, True-Color-Sensor (Echt-Farben-Sensor) oder RGB-Sensor (Rot-Grün-Blau-Sensor). Der Farbtemperatursensor erfasst separat die Farben Rot, Grün und Blau (RGB). Für jeden RGB-Messwert, d. h. aus den jeweiligen Anteilen von Rot, Grün und Blau im erfassten Licht, kann der Farbtemperatursensor die zugehörige Farbtemperatur (CCT) berechnen.

Das in der Aufzugskabine zu detektierende Objekt kann beliebig sein. So könnte es sich um eine Person, einen dinglichen Gegenstand, ein Tier, usw. handeln. Als Objekt wird auch eine veränderte Farbgebung (bzw. ein nicht dinglicher Gegenstand) des Aufzugskabinenraumes angesehen, welche beispielsweise durch Bekleben, Besprühen oder einer anderen Schädigung des Innenraumes entstehen kann. Als nicht dinglicher Gegenstand kann auch Rauch, Feuer oder ähnliches angesehen werden.

Ein Vorteil der Erfindung besteht darin, dass auch solche Objekte in der Aufzugskabine detektiert werden können, die keine oder nur geringe Wärmestrahlung abgeben.

Ein weiterer Vorteil ist darin zu sehen, dass ein Objekt in der Aufzugskabine dadurch detektiert wird, dass ein Vergleich zwischen einer aktuell erfassten Farbtemperatur und einer Referenz-Farbtemperatur - d. h. einem vorher ermittelten statischen bzw. fixen Referenzwert der Farbtemperatur -, stattfindet, was relativ geringe Anforderungen an den Prozessor der den Vergleich durchführenden Steuereinheit stellt.

Ein weiterer Vorteil besteht darin, dass aufgrund des Vergleichs mit der Referenz-Farbtemperatur (Referenzwert) die Zeit abgeschätzt werden kann, während der die Aufzugskabine leer ist, was für Auslastungsanalysen für den Aufzugsbetreiber verwendet werden kann.

Ein weiterer Vorteil besteht darin, dass zusätzlich zur Detektion der Anwesenheit eines Objektes in der Aufzugskabine der Zustand der Leuchtmittel in der Aufzugskabine überwacht werden kann. Sind Leuchtmittel ausgefallen, so könnte beispielsweise von der Steuereinheit eine Nachricht an eine Wartungszentrale eines Aufzugsherstellers übermittelt werden, um zu veranlassen, dass das ausgefallene Leuchtmittel ersetzt wird.

Ein weiterer Vorteil ist darin zu sehen, dass durch das erfindungsgemässe Verfahren die Privatsphäre einer Person in der Aufzugskabine gewahrt wird, da lediglich die Farbtemperatur (CCT) des auf den Farbtemperatursensor auftreffenden Lichts erfasst wird. Eine Erfassung von Merkmalen von Personen, wie dies beispielsweise bei Verwendung einer Videokamera zur Anwesenheitsdetektion möglich ist, ist bei der vorliegenden Erfindung ausgeschlossen.

Vorzugsweise wird während des Aufzugbetriebs die Farbtemperatur (CCT) während eines vorher definierten Zeitraums in vorher definierten Zeitabständen (Intervall) erfasst. Die Aufzugskabine weist zumindest eine Kabinentüre auf, die gemeinsam mit einer der Stockwerkstüren eine Aufzugstüre bildet. Der vorher definierte Zeitraum kann beispielsweise nach dem Öffnen oder nach dem Schliessen der Aufzugtüre oder nach dem Fahrtbeginn der Aufzugkabine beginnen.

Je nach Ausgestaltung des Verfahrens können in der Aufzugskabine sowohl die während des Aufzugsbetriebs erfasste Farbtemperatur als auch die vorher erfasste Referenz-Farbtemperatur entweder nur bei geschlossener Aufzugstüre oder bei geschlossener und bei offener Aufzugstüre erfasst werden.

Vorzugsweise wird von der Steuereinheit entsprechend der während eines definierten Zeitraums des Aufzugbetriebs erfassten Farbtemperatur (CCT) eine zeitabhängige Farbtemperaturkurve generiert. Als Farbtemperaturkurve wird hier eine von der Steuereinheit generierte Kurve genannt, welche durch eine Anzahl n von Farbtemperaturwerten definiert ist, die während einer Zeit t erfasst und registriert wurden.

Die Farbtemperaturwerte und die daraus generierten Farbtemperaturkurven können in einer Speichereinheit einer Steuereinheit gespeichert werden.

Vorzugsweise wird vor Beginn des Aufzugsbetriebs eine vorher erfasste Referenz-Farbtemperatur bei leerer Aufzugskabine erfasst und als zeitabhängige Referenz-Farbtemperaturkurve registriert.

Vorzugsweise wird der von der Steuereinheit durchgeführte Vergleich zwischen der während des Aufzugbetriebs erfassten Farbtemperaturkurve und der Referenz-Farbtemperaturkurve in Abhängigkeit von mindestens einer Regel durchgeführt.

Vorzugsweise wird für den Vergleich der Farbtemperaturkurven eine stochastische Auswertungsmethode verwendet.

Als stochastische Auswertungsmethode können beispielsweise eine Ermittlung einer Normalverteilung, eine Ermittlung einer Gauss-Verteilung, eine Bestimmung einer Varianz, eine Bestimmung eines Mittelwertes und/oder eines Maximalwertes verwendet werden. So könnte beispielsweise eine Normalverteilung bzw. Gauss-Verteilung der erfassten Farbtemperaturwerte ermittelt und als Basis für den Vergleich verwendet werden. Es könnte aber auch Kennwerte wie eine Varianz, ein Mittelwert oder ein Maximalwert für den Vergleich herangezogen werden. Die Normalverteilung ist eine parametrische Verteilung, die durch den Mittelwert und die Varianz beschrieben ist, d. h. wenn die Normalverteilung genutzt wird, lassen sich daraus der Mittelwert und die Varianz bestimmen. Selbstverständlich ist es erfindungsgemäss ebenso vorstellbar, dass auch nicht-parametrische Auswertungsmethoden bzw. mathematischen Verfahren, wie beispielsweise die Klassifikation durch k-nächsten Nachbarn (k-Nearest Neighbor), verwendet werden. Bei solchen Auswertungsmethoden bzw. Verfahren werden dann Kennwerte wie Median, Minimum, Maximum oder ähnliche bestimmt und genutzt.

In Abhängigkeit vom vorzugsweise mittels stochastischer Methoden durchgeführten Vergleich zwischen während des Aufzugbetriebs erfassten Farbtemperaturkurven und der Referenz-Farbtemperaturkurve, und in Abhängigkeit von mindestens einer Regel wird von der Steuereinheit ermittelt, ob sich ein Objekt in der Aufzugskabine befindet. Im einfachsten Fall handelt es sich bei der mindestens einen Regel darum, dass der mindestens eine vorher mittels stochastischer Methoden ermittelte Vergleichswert für die während des Aufzugbetriebs erfassten Farbtemperaturkurven grösser bzw. kleiner als der mittels stochastischer Methoden ermittelte Vergleichswert für die Referenz-Farbtemperaturkurve sein muss, damit angenommen werden kann, dass sich ein Objekt in der Aufzugskabine befindet. Selbstverständlich kann die mindestens eine Regel beliebig ausgestaltet sein und hängt u. a. von der verwendeten Auswertungsmethode bzw. vom verwendeten mathematischen Verfahren ab. So könnte beispielsweise auch die vertikale Position der Aufzugskabine in einem Aufzugsschacht bzw. das von der Aufzugskabine angefahrene Stockwerk für die mindestens eine Regel verwendet werden, da die Lichtverhältnisse auf den einzelnen Stockwerken unterschiedlich sein können.

Bei einer der möglichen Ausführungsformen des erfindungsgemässen Verfahrens bzw. der erfindungsgemässen Einrichtung wird zur Erfassung der Referenz-Farbtemperatur mindestens eine Lernfahrt der Aufzugskabine durchgeführt. Dies ist insbesondere dann zweckmässig, wenn die Detektion von in der Aufzugkabine vorhandenen Objekten auch bei geöffneter Aufzugstüre funktionieren soll. Dafür wird bei leerer Aufzugskabine die vorher erfasste Referenz-Farbtemperatur einmal bei geschlossener Aufzugstüre und zusätzlich auf jedem Stockwerk bei geöffneter Aufzugstüre erfasst. Unter Lernfahrt kann grundsätzlich verstanden werden, dass die Aufzugskabine vertikal in jedes Stockwerk des Gebäudes, in dem sich die Aufzugsanlage befindet, gefahren und auf dem jeweiligen Stockwerk die Aufzugstüre geöffnet und wieder geschlossen wird. Während der Lernfahrt werden vom Farbtemperatursensor auf jedem Stockwerk eine dem Stockwerk zugeordnete Referenz-Farbtemperatur - vorzugsweise in Form einer zeitabhängigen Referenz-Farbtemperaturkurve - erfasst. Für die meisten Anwendungsfälle der Erfindung wird jedoch die Referenz-Farbtemperatur ausschliesslich bei geschlossener Aufzugstüre erfasst.

Vorzugsweise werden als Steuereinheit für die Auswertung der Signale des Farbtemperatursensors eine Aufzugssteuerung, eine Steuereinheit des Farbtemperatursensors und/oder eine separate Steuereinheit verwendet. Damit wird eine hohe Flexibilität bei der Anwendung der Erfindung erreicht.

Vorzugsweise wird die Steuereinheit mit dem Farbtemperatursensor über ein drahtloses Kommunikationsnetz verbunden. Dadurch kann die Erfindung realisiert werden, ohne dass zusätzliche Signalleitungen zwischen der Steuereinheit und der Aufzugkabine bzw. dem Farbtemperatursensor erforderlich werden.

Im Folgenden wird die Erfindung anhand eines in den Figuren dargestellten Ausführungsbeispiels näher erläutert. Dabei zeigen
- Figur 1: eine vereinfachte Darstellung einer erfindungsgemässen Aufzugsanlage,
- Figur 2: ein Diagramm, das zeigt, wie die Anwesenheit eines Objekts unterschiedlich starke Veränderungen bei einer Beleuchtungsstärkenkurve und bei einer Farbtemperaturkurve bewirkt.
- Figur 3: eine vereinfachte Darstellung einer Aufzugskabine mit einem zu detektierenden Objekt.

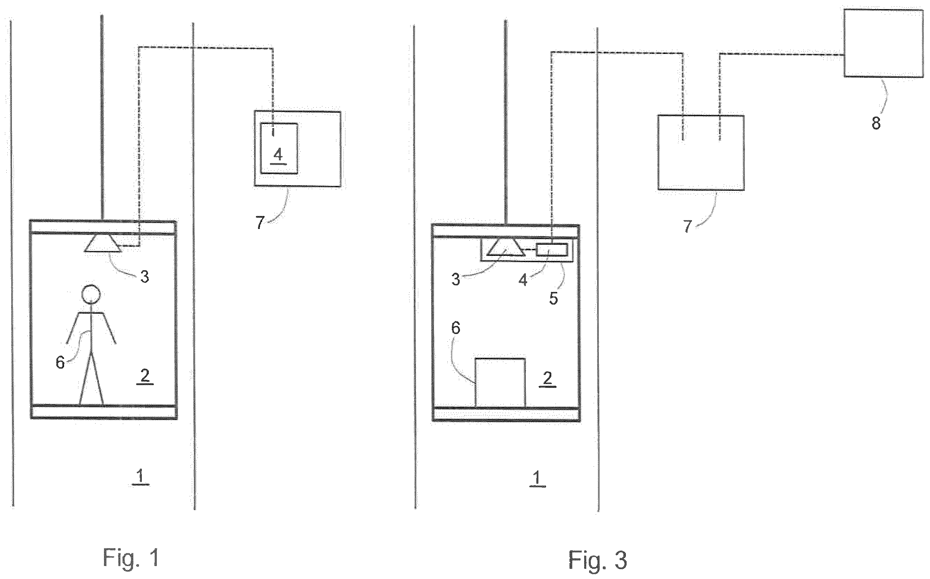

Fig. 1 zeigt eine schematische Darstellung einer Aufzugsanlage, die zur Anwendung des erfindungsgemässen Verfahrens ausgestaltet ist. In einem Aufzugsschacht 1 fährt eine Aufzugskabine 2 vertikal zwischen nicht dargestellten Stockwerken eines Gebäudes auf und ab. Die Aufzugskabine weist eine Kabinentüre auf, die gemeinsam mit jeweils einer Stockwerkstüre eine Aufzugstüre bildet. Dabei ist die Aufzugskabine 2 über ein Tragmittel, namentlich ein Seil, einen Riemen oder etwas Ähnliches, mit einem nicht gezeigten Antrieb verbunden. Die Aufzugsanlage weist weiter eine Steuereinheit 4 auf, welche im vorliegenden Beispiel als Teil einer Aufzugssteuerung 7 ausgestaltet sein kann.

In der Aufzugskabine 2 ist ein Farbtemperatursensor 3 derart angeordnet, dass er den Innenraum der Aufzugskabine 2 überwachen kann. Es können auch mehrere Farbtemperatursensoren 3 an unterschiedlichen Stellen bzw. Positionen in der Aufzugskabine 2 angeordnet werden. In Beispiel gemäss Fig. 1 ist der Farbtemperatursensor 3 an der Decke der Aufzugskabine 2 installiert bzw. angeordnet.

Der Farbtemperatursensor 3 ist über ein drahtgebundenes oder drahtloses Kommunikationsnetz mit der Steuereinheit 4 verbunden. Erfindungsgemäss könnte die Steuereinheit 4 auch als Einheit des Farbtemperatursensors 3 oder als separate Einheit ausgestaltet sein. Die Steuereinheit 4 könnte so ausgestaltet sein, dass sie beispielsweise Parameter bzw. Daten von Sensoren - wie dem Farbtemperatursensor 3 - der Aufzugsanlage übermittelt erhält, diese verarbeitet und die Resultate an eine Wartungszentrale eines Aufzugsherstellers übermittelt.

Der Farbtemperatursensor 3 in der Aufzugskabine 2 erfasst mindestens das sichtbare Licht in einem Spektralbereich zwischen etwa 380 nm und 780 nm, das auf den Farbtemperatursensor 3 auftrifft. Unter einem Farbtemperatursensor 3 wird allgemein ein signalgebendes optisches Gerät zur selektiven Erfassung und Bewertung des sichtbaren Spektralbereichs von Licht verstanden, d. h. ein Gerät, das die Farben Rot, Grün und Blau (RGB) separat erfasst und aus den Anteilen der erfassten Grundfarben die Farbtemperatur (CCT) des auf das Gerät auftreffenden Lichts errechnet.

Die Farbtemperatur (CCT) kann bei geöffneter und/oder geschlossener Aufzugstüre vom Farbtemperatursensor 3 erfasst werden. Die Detektion einer Anwesenheit eines Objektes 6 in der Aufzugskabine 2 erfolgt jedoch vorzugsweise nur bei geschlossener Aufzugstüre. Objekt 6 kann eine Person, ein Tier, ein dinglicher Gegenstand oder Ähnliches sein. Auch könnte es sich beim Objekt 6 um eine veränderte Farbgebung bzw. einen nicht dinglichen Gegenstand des Aufzugskabinenraumes handeln, die beispielsweise durch Bekleben, Besprühen mit Farbe oder einer anderen Schädigung des Innenraumes entstehen kann. Im vorliegenden Beispiel soll ein Objekt 6 in Form einer Person detektiert werden.

Während des Aufzugbetriebs wird idealerweise die Farbtemperatur (CCT) während einer vorher definierten Zeit t mit einem vorher definierten Zeitabstand (Intervall) zwischen einzelnen Messungen erfasst. Aus den Messwerten wird von der Steuereinheit 4 eine so genannte Farbtemperaturkurve "B" generiert, welche durch einer Anzahl n von Farbtemperaturwerten definiert ist, die während der Zeit t ermittelt und registriert wurden. Die Farbtemperaturkurve kann mit Hilfe von stochastischen bzw. statistischen Auswertungsmethoden, sowie mit gewissen mathematischen Verfahren ausgewertet werden. Mittels solcher Auswertungsmethoden vergleicht die Steuereinheit 4 während des Aufzugbetriebs erfasste bzw. generierte Farbtemperaturkurven mit der vorher erfassten Referenz-Farbtemperaturkurve, und in Abhängigkeit von diesem Vergleich wird das Objekt 6, hier eine Person, in der Aufzugskabine 2 detektiert.

Die vorher bei leerer Aufzugskabine 2 erfasste Referenz-Farbtemperaturkurve kann dabei in einer Speichereinheit der Steuereinheit 4 gespeichert sein. Insbesondere falls das erfindungsgemässe Verfahren Objekte auch bei offener Türe der Aufzugkabine detektieren soll, kann zum Erfassen der Referenz-Farbtemperaturkurve eine Lernfahrt der Aufzugskabine 2 durchgeführt werden. Unter Lernfahrt kann grundsätzlich verstanden werden, dass die Aufzugskabine 2 vertikal in jedes Stockwerk des Gebäudes, in dem sich die Aufzugsanlage befindet, gefahren wird, und dass auf dem jeweiligen Stockwerk die Aufzugstüre geöffnet und wieder geschlossen wird. Während der Lernfahrt werden vom Farbtemperatursensor 3 den Stockwerken und dem Status der Kabinentüre zugeordnete Farbtemperaturen erfasst, die zur Bestimmung von stockwerkbezogenen Referenz-Farbtemperaturkurven verwendet werden können.

Der Vergleich der während des Aufzugbetriebs erfassten Farbtemperaturkurve mit der vorher bei leerer Aufzugskabine 2 erfassten Referenz-Farbtemperaturkurve kann durch verschiedene stochastische bzw. statistische Auswertungsmethoden und/oder mathematischen Verfahren erfolgen. So könnte beispielsweise eine Normalverteilung bzw. Gauss-Verteilung ermittelt werden. Auch könnte eine Varianz, ein Mittelwert und/oder ein Maximalwert für den Vergleich herangezogen werden.

Die während des Aufzugbetriebs erfassten Messwerte des Farbtemperatursensors 3 können durch Auswerten der daraus generierten Farbtemperaturkurve mittels der vorstehend genannten Auswertungsmethoden bzw. mathematischen Verfahren analysiert werden. Die Steuereinheit 4 kann daraus Merkmale detektieren, welche dann mit analogen Merkmalen der vorher erfassten Referenz-Farbtemperaturkurve verglichen werden. Solche Merkmale können beispielsweise ein Maximalwert, eine Varianz, ein Mittelwert, eine Standardabweichung, eine Abweichung zu einem bestimmten Messwert bzw. Parameter, bestimmte Messwerte zu einer Zeit t oder ähnliches sein.

Die Detektion eines Objektes 6 durch die Steuereinheit 4 kann in Abhängigkeit vom Vergleich der beiden Farbtemperaturkurven und von mindestens einer Regel erfolgen. Im einfachsten Fall handelt es sich bei der mindestens einen Regel darum, dass das durch Auswerten der während des Aufzugbetriebs erfassten Farbtemperaturkurve ermittelte Merkmal grösser oder kleiner als das durch Auswerten der Referenz-Farbtemperaturkurve ermittelte Merkmal sein muss, damit angenommen werden kann, dass sich ein Objekt 6 in der Aufzugskabine 2 befindet. Selbstverständlich kann die mindestens eine Regel beliebig ausgestaltet sein und hängt u. a. von der verwendeten Auswertungsmethode bzw. vom verwendeten mathematischen Verfahren ab. So könnte beispielsweise auch die vertikale Position der Aufzugskabine 2 in dem Aufzugsschacht 1 bzw. das von der Aufzugskabine 2 angefahrene Stockwerk als Grundlage für eine Regel verwendet werden, da die Lichtverhältnisse auf den einzelnen Stockwerken unterschiedlich sein können.

Wird ein Objekt 6 von der Steuereinheit 4 detektiert, so können verschiedenste Aktionen von der Aufzugsanlage erfolgen. Wird - beispielsweise bei einer Leerfahrt - von der Steuereinheit 4 eine Beschädigung des Innenraumes der Aufzugskabine 2 detektiert, so kann die Steuereinheit 4 eine Information über die Beschädigung an eine Wartungszentrale eines Aufzugsherstellers übermitteln. Dies kann mittels einer Nachricht über ein drahtgebundenes oder drahtloses Kommunikationsnetz erfolgen. Wird das Objekt 6 als dinglicher Gegenstand, beispielsweise eine Kiste, eine Schachtel oder Ähnliches, von der Steuereinheit 4 identifiziert - beispielsweise durch zusätzlichen Vergleich der aktuellen Farbtemperaturkurve mit einer Muster-Farbtemperaturkurve - kann die Aufzugstüre offen gelassen bzw. geöffnet werden. Wird auf dieselbe Weise eine Person detektiert, kann in Abhängigkeit von einer eingegebenen Fahrtanfrage eine Aufzugsfahrt durchgeführt oder die Aufzugstüre geöffnet werden, sofern kein Fahrtziel eingegeben wurde.

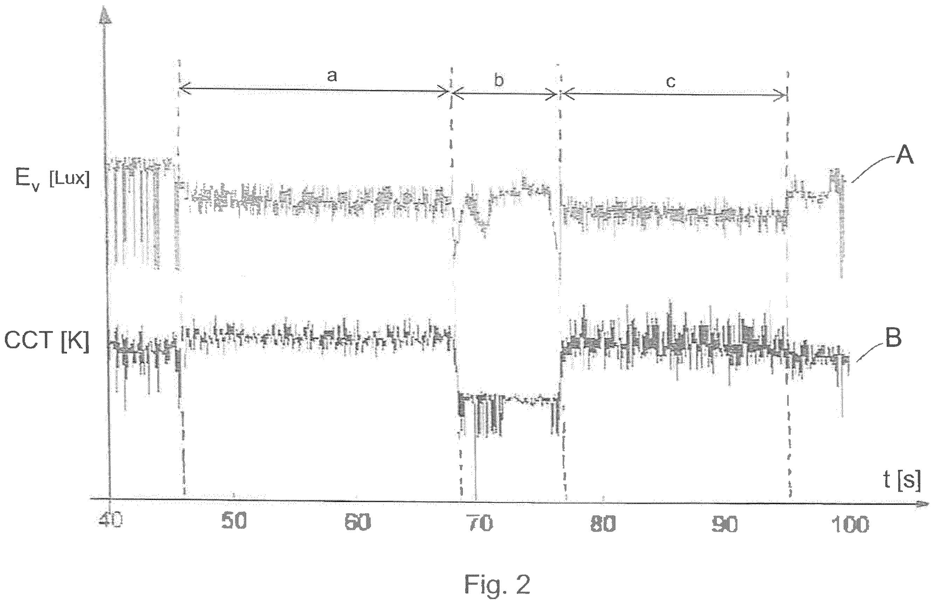

Figur 2 zeigt zwei zeitabhängige Messwertkurven von in einer Aufzugskabine durch unterschiedliche Lichtsensoren erfassten Messwerten von Lichtgrössen. Die Erfassung der Messwerte erfolgt dabei im sichtbaren Wellenlängenbereich von Licht.

Bei der Messwertkurve "A" wurden in definierten Zeitabständen erfasste Messwerte der Beleuchtungsstärke Eᵥ - gemessen in Lux - gegen die Zeit t als Beleuchtungsstärkenkurve A aufgetragen, und bei der Messwertkurve "B" wurden in definierten Zeitabständen erfasste Messwerte der Farbtemperatur CCT - gemessen in Kelvin (K) - als Farbtemperaturkurve aufgetragen.

Die beiden Messwertkurven A und B sind in diesem Beispiel in drei Abschnitte a, b und c aufgeteilt. Abschnitt c beschreibt Zeitabschnitte beider Messwertkurven, in welchen ein Objekt - bspw. eine Person - in der Aufzugskabine 2 vorhanden und die Aufzugstüre geschlossen ist. Abschnitt b zeigt Zeitabschnitte beider Messwertkurven, in welchen die Aufzugstüre geöffnet ist. Abschnitt a zeigt Zeitabschnitte beider Messwertkurven in welchen die Aufzugskabine 2 leer und die Aufzugtüre geschlossen ist. Sowohl bei der Beleuchtungsstärkenkurve A als auch bei der Farbtemperaturkurve B nimmt in Abschnitt c (Objekt vorhanden) die Varianz der Messwerte zu. Bei der Farbtemperaturkurve CCT ist jedoch der detektierbare und auswertbare Unterschied - z. B. der Unterschied in der Varianz der Messwertreihe - zwischen dem Zeitabschnitt mit vorhandenem und dem Zeitabschnitt mit nicht vorhandenem Objekt wesentlich grösser, was den enormen Vorteil einer Anwesenheitsdetektion mittels Farbtemperatursensor erkennen lässt.

Figur 3 zeigt schematisch eine schematische Darstellung einer weiteren Aufzugsanlage, die zur Anwendung des erfindungsgemässen Verfahrens ausgestaltet ist. Die Aufzugsanlage umfasst eine Aufzugskabine 2, die eine erfindungsgemässe Vorrichtung 5 zur Anwesenheitsdetektion aufweist. In der Aufzugskabine ist ein zu detektierendes Objekt 6 vorhanden, beispielsweise ein dinglicher Gegenstand, wie eine Kiste. Die Aufzugsanlage umfasst des Weiteren eine Aufzugssteuerung 7. Das Verfahren zur Detektion des Objektes 6 wird wie vorstehend im Zusammenhang mit den Figuren 1 und 2 beschrieben durchgeführt.

Im dargestellten Beispiel bilden die Steuereinheit 4 und der Farbtemperatursensor 3 eine Einrichtung 5 zur Anwesenheitsdetektion als integrierte Einheit. Die Steuereinheit 4 kann jedoch auch als separate Einheit vorhanden sein und über ein Kommunikationsnetz mit dem Farbtemperatursensor 3 verbunden sein. Die Steuereinheit 4 ist über ein drahtgebundenes oder drahtungebundenes Kommunikationsnetz mit der Aufzugssteuerung 7 sowie mit einer Wartungszentrale 8 eines Aufzugsherstellers verbunden. Sie kann dieser Wartungszentrale 8 in einer Nachricht detektierte Merkmale der Farbtemperaturkurve oder bereits aus der Farbtemperaturkurve abgeleitete Information betreffend Vorhandensein eines Objekts 6 oder eine Zustandsveränderung in der Aufzugskabine 2 übermitteln. Auf diese Weise kann beispielsweise eine die Farbtemperatur beeinflussende Beschädigung des Innenraumes der Aufzugskabine 2 angezeigt werden, um zu veranlassen, dass ein Servicetechniker die Aufzugsanlage wartet. Auch kann mit dem erfindungsgemässen Verfahren ein defektes Leuchtmittel der Kabinenbeleuchtung detektiert und ein Austausch angefordert werden. Die Information, ob sich in der Aufzugskabine 2 ein Objekt 6 befindet, ist nicht nur für die Steuerung der Aufzugsanlage von Relevanz, sondern beispielsweise auch dann, wenn die Aufzugsanlage ausser Funktion ist und eine Person in der Aufzugskabine 2 eingeschlossen wurde. Auch bei einem Brandfall im Gebäude könnte eine derartige Information wichtig sein, damit für die in der Aufzugskabine 2 eingeschlossene Person effiziente und schnelle Massnahmen zur Rettung ergriffen werden können.

## Patentansprüche

1. Verfahren zur Anwesenheitsdetektion eines Objektes (6) in einer Aufzugskabine (2) einer Aufzugsanlage,
**dadurch gekennzeichnet,**
**dass** während des Aufzugbetriebs durch einen in der Aufzugskabine (2) angebrachten Farbtemperatursensor (3) die Farbtemperatur des auf den Farbtemperatursensor (3) auftreffenden Lichts erfasst wird, und
**dass** in Abhängigkeit von einem Vergleich der während des Aufzugbetriebs erfassten Farbtemperatur mit einer vorher erfassten Referenz-Farbtemperatur ein in der Aufzugskabine (2) vorhandenes Objekt (6) durch eine mit dem Farbtemperatursensor (3) verbundene Steuereinheit (4) detektiert wird.

2. Verfahren nach Anspruch 1,
**dadurch gekennzeichnet, dass**
während des Aufzugbetriebs die Farbtemperatur während eines vorher definierten Zeitraums in vorher definierten Zeitabständen erfasst wird.

3. Verfahren nach Anspruch 1 oder 2,
**dadurch gekennzeichnet, dass**
von der Steuereinheit (4) eine zeitabhängige Farbtemperaturkurve entsprechend der während des Aufzugbetriebs erfassten Farbtemperatur erzeugt wird.

4. Verfahren nach einem der Ansprüche 1 bis 3,
**dadurch gekennzeichnet, dass**
die vorher erfasste Referenz-Farbtemperatur bei leerer Aufzugskabine (2) erfasst und als zeitabhängige Referenz-Farbtemperaturkurve registriert wird.

5. Verfahren nach einem der Ansprüche 1 bis 4,
**dadurch gekennzeichnet, dass**
der von der Steuereinheit (4) durchgeführte Vergleich zwischen der während des Aufzugbetriebs erfassten Farbtemperaturkurve und der Referenz-Farbtemperaturkurve in Abhängigkeit von mindestens einer Regel durchgeführt wird.

6. Verfahren nach einem der Ansprüche 1 bis 5,
**dadurch gekennzeichnet,**
**dass** für den Vergleich der Farbtemperaturkurven eine stochastische Auswertungsmethode verwendet wird.

7. Verfahren nach Anspruch 6,
**dadurch gekennzeichnet,**
**dass** als stochastische Auswertungsmethode eine Ermittlung einer Normalverteilung, eine Ermittlung einer Gauss-Verteilung, eine Bestimmung einer Varianz, eine Bestimmung eines Mittelwertes oder eines Maximalwertes verwendet werden.

8. Verfahren nach einem der vorangegangenen Ansprüche,
**dadurch gekennzeichnet,**
**dass** zur Erfassung der vorher erfassten Referenz-Farbtemperatur mindestens eine Lernfahrt der Aufzugskabine (2) durchgeführt wird.

9. Verfahren nach einem der vorangegangenen Ansprüche,
**dadurch gekennzeichnet,**
**dass** als Steuereinheit (4) eine Aufzugssteuereinheit, eine Steuereinheit des Farbtemperatursensors und/oder eine separate Steuereinheit verwendet werden.

10. Verfahren nach einem der vorangegangenen Ansprüche,
**dadurch gekennzeichnet,**
**dass** die Steuereinheit (4) mit dem Farbtemperatursensor über ein drahtloses Kommunikationsnetz verbunden wird.

11. Einrichtung zur Anwesenheitsdetektion eines Objektes (6) in einer Aufzugskabine (2) einer Aufzugsanlage,
**dadurch gekennzeichnet,**
**dass** die Einrichtung einen in der Aufzugskabine (2) angebrachten Farbtemperatursensor (3) zur Erfassung einer Farbtemperatur umfasst, und
**dass** die Einrichtung eine mit dem Farbtemperatursensor (3) verbundene Steuereinheit (4) umfasst, welche Steuereinheit in Abhängigkeit von einem Vergleich einer während des Aufzugbetriebs erfassten Farbtemperatur mit einer vorher erfassten Referenz-Farbtemperatur ein in der Aufzugskabine (2) vorhandenes Objekt (6) detektiert.

## Claims

1. Method of detecting the presence of an object (6) in an elevator car (2) of an elevator system **characterised in that**
during the operation of the elevator by way of a colour temperature sensor (3) applied in the elevator car (2) the colour temperature of the light striking the colour temperature sensor (3) is recorded and
that in dependence on a comparison of the colour temperature recorded during operation of elevator with a previously recorded reference colour temperature an object (6) present in the elevator car (2) is detected by a control unit (4) connected to the colour temperature sensor (3).

2. Method according to claim 1
**characterised in that**
during the operation of the elevator the colour temperature is recorded over a predefined period of time at predefined time intervals.

3. Method according to claim 1 or 2
**characterised in that**
a time-dependent colour temperature curve corresponding to the colour temperature recorded during the operation of the lift is produced by the control unit (4).

4. Method according to any one of claims 1 to 3
**characterised in that**
the previously recorded reference temperature is recorded when the elevator car (2) is empty and is recorded as a time-dependent colour temperature curve.

5. Method according to any one of claims 1 to 4
**characterised in that**
the comparison carried out by the control unit (4) between the colour temperature curve recorded during the operation of elevator and the reference colour temperature curve is carried out in dependence on at least one rule.

6. Method according to any one of claims 1 to 5
**characterised in that**
a stochastic evaluation method is used for the comparison of the colour temperature curves.

7. Method according to claim 6
**characterised in that**
as the stochastic evaluation method a determination of normal distribution, a determination of a Gaussian distribution, a determination of a variance, a determination of a mean value or of a maximum values are used

8. Method according to any one of the preceding claims,
**characterised in that**
in order to record the previously recorded reference temperature at least one learning operation of the elevator car (2) is carried out.

9. Method according to any one of the preceding claims
**characterised in that**
as the control unit (4) an elevator control unit, a control unit of the colour temperature sensor and/or a separate control unit are used.

10. Method according to any one of the preceding claims
**characterised in that**
the control unit (4) is connected to the colour temperature sensor via wireless communication network.

11. Device for detecting the presence of an object (6) in an elevator car (2) of an elevator system, **characterised in that**
the system comprises a colour temperature sensor (3) for recording a colour temperature which is applied in the elevator car (2) and
**in that** the device comprises a control unit (4) connected to the colour temperature sensor (3), wherein said control unit, in dependence on a comparison of a colour temperature recorded during operation of the elevator with a previously recorded reference colour temperature detects an object (6) present in the elevator car (2)

## Revendications

1. Procédé pour la détection de présence d'un objet (6) dans une cabine d'ascenseur (2) d'une installation d'ascenseur,
**caractérisé en ce que** pendant le fonctionnement de l'ascenseur, à l'aide d'un capteur de température (3) installé dans la cabine d'ascenseur (2) la température de couleur de la lumière qui arrive sur ledit capteur de température de couleur (3) est relevée, et
**en ce qu'**en fonction d'une comparaison de la température de couleur relevée pendant le fonctionnement de l'ascenseur avec une température de couleur de référence relevée au préalable, un objet (6) présent dans la cabine d'ascenseur (2) est détecté à l'aide d'une unité de commande (4) reliée au capteur de température de couleur (3).

2. Procédé selon la revendication 1, **caractérisé en ce que** pendant le fonctionnement de l'ascenseur, la température de couleur est relevée pendant une durée définie au préalable, suivant des intervalles de temps définis au préalable.

3. Procédé selon la revendication 1 ou 2, **caractérisé en ce qu'**une courbe de température de couleur qui est fonction du temps est générée par l'unité de commande (4) suivant la température de couleur relevée pendant le fonctionnement de l'ascenseur.

4. Procédé selon l'une des revendications 1 à 3, **caractérisé en ce que** la température de couleur de référence relevée au préalable est relevée alors que la cabine d'ascenseur (2) est vide, et est enregistrée comme courbe de température de couleur de référence qui est fonction du temps.

5. Procédé selon l'une des revendications 1 à 4, **caractérisé en ce que** la comparaison effectuée par l'unité de commande entre la courbe de température de couleur relevée pendant le fonctionnement d'ascenseur et la courbe de température de couleur de référence est effectuée en fonction d'au moins une règle.

6. Procédé selon l'une des revendications 1 à 5, **caractérisé en ce qu'**on utilise pour la comparaison des courbes de température de couleur une méthode d'analyse stochastique.

7. Procédé selon la revendication 6, **caractérisé en ce qu'**on utilise comme méthode d'analyse stochastique une détermination d'une distribution normale, une détermination d'une distribution de Gauss, une définition d'une variance, une définition d'une valeur moyenne ou d'une valeur maximale.

8. Procédé selon l'une des revendications précédentes, **caractérisé en ce que** pour relever la température de couleur de référence relevée au préalable, au moins un trajet d'apprentissage de la cabine (2) est effectué.

9. Procédé selon l'une des revendications précédentes, **caractérisé en ce qu'**on utilise comme unité de commande (4) une unité de commande d'ascenseur, une unité de commande du capteur de température de couleur et/ou une unité de commande séparée.

10. Procédé selon l'une des revendications précédentes, **caractérisé en ce que** l'unité de commande (4) est reliée au capteur de température de couleur par l'intermédiaire d'un réseau de communication sans fil.

11. Dispositif pour la détection de présence d'un objet (6) dans une cabine d'ascenseur (2) d'une installation d'ascenseur,
**caractérisé en ce que** le dispositif comprend un capteur de température de couleur (3) installé dans la cabine d'ascenseur (2), pour relever une température de couleur, et
**en ce que** le dispositif comprend une unité de commande (4) reliée au capteur de température de couleur (3), laquelle unité de commande, en fonction d'une comparaison entre une température de couleur relevée pendant le fonctionnement de l'ascenseur et une température de couleur de référence relevée au préalable, détecte un objet (6) présent dans la cabine d'ascenseur (2).
